# EUROPEAN PATENT SPECIFICATION

(11) **EP 4 035 949 B1**
(45) Date of publication and mention of the grant of the patent: **20.11.2024**
(21) Application number: 21215558.4
(22) Date of filing: 17.12.2021
(51) Int. Cl.: B60R 16/02

(54) **CABLE FEEDTHROUGH ASSEMBLY FOR VEHICLE**
KABELDURCHFÜHRUNGSVORRICHTUNG FÜR EIN FAHRZEUG
ENSEMBLE TRAVERSÉE DE CÂBLES POUR VÉHICULE

(30) Priority: 27.01.2021 GB 202101071
(43) Date of publication of application: 03.08.2022
(73) Proprietor: AGCO International GmbH, 8212 Neuhausen am Rheinfall (CH)
(72) Inventor: MUHONEN, Kai Petteri, FI-44200 Suolahti (FI)
(74) Representative: AGCO Intellectual Property Department

(56) References cited:
- EP-A1- 0 580 130
- EP-A1- 3 517 816
- WO-A1-2020/091823
- DE-B- 1 039 115
- JP-A- 2001 176 346
- JP-A- 2008 171 595
- US-A1- 2012 211 262

## Description

### FIELD OF THE INVENTION

The invention relates to a cable feedthrough assembly for guiding and sealing at least one cable passing through an aperture in a wall, such as a body panel of a vehicle. The invention also relates to a vehicle, especially a work vehicle such as a tractor, having such a cable feedthrough assembly.

### BACKGROUND

Many vehicles use control cables which are connected at one end to a user activated control device within the interior of a driver compartment or cab and at the other end to a controlled system located in an exterior zone of the vehicle, such as an engine compartment or at the rear of the vehicle. A control cable is typically routed through an aperture in a body panel (e.g. a bulkhead) of the vehicle to pass from the interior of the vehicle driver compartment to the exterior zone and a feedthrough assembly is provided to guide the cable through the aperture and to close the aperture about the cable to prevent the ingress of water and/or dirt. In known arrangements, an elastomeric seal or grommet is secured to the body panel about the aperture and has a hole through which the control cable passes.

Some vehicles, especially working vehicles such as tractors or excavators, may require a number of control cables to be routed through a single aperture in a body panel. This might include control cables for a hydraulic system which may be push-pull type cables and/or rotary control cables for actuating valves of the hydraulic system. Where a number of cables pass through the same aperture in a body panel, it is known to use a single sealing block with a corresponding number of holes through each of which a respective cable can pass. In order that the cables can be inserted into the holes, a slit is formed extending from a periphery of the seal to each hole. When fitting the seal into place, each slit is opened to enable a cable to pass through the slit into the hole, with the slit closing once the cable is in place. A problem with this arrangement is that the cables, which are often stiff and liable to movement, can deform the seal so that it does not fully engage about the cable and/or the slits do not fully close. This enables water and/or dirt to enter the driver compartment.

JP 2001 176346 A discloses a number of different arrangements for supporting multiple cables passing through a body panel in a vehicle. In one embodiment, a flexible grommet is secured in a first aperture in the body panel. The grommet defines a second aperture smaller than the first aperture through which multiple cables are passed. A partition plate is secured in a groove defined in the grommet about the periphery of the second aperture. The partition plate is made up of two plate sections which are engaged in the groove to lie one on-top of the other. Each plate section has a number of U-shaped notches which open at one side of the plate section. The plate sections are positioned in the grommet with their notches extending in opposite directions. The notches are configured so that corresponding pairs of notches in the two plate sections align to define an aperture for supporting a respective cable. The flexible grommet allows the partition plate to move relative to the body panel.

### SUMMARY OF THE INVENTION

It is an objective of the invention to provide an alternative cable feedthrough assembly which overcomes, or at least mitigates, some or all of the drawbacks of the known feedthrough assemblies.

It is a further objective of the invention to provide a vehicle, especially a working vehicle such as a tractor or excavator, which incorporates such an alternative cable feedthrough assembly.

In accordance with a first aspect of the invention, there is provided a cable feedthrough assembly as defined in claim 1.

In the cable feedthrough assembly in accordance with this aspect of the invention, the first and second seal members are relatively thin and sufficiently flexible that they can adapt to the shape of the cable passing through the aligned first and second through-holes and accommodate cable movement. Because the cable insertion slits are offset and do not overlap, even if one does not fully close, or is deformed due to cable movement, a path through the body panel aperture is closed by the other seal member to prevent ingress of water and/or dirt. Similarly, any opening formed about the cable in one of the seal members will usually be closed by the other seal member.

The insertion slits are configured to enable the respective seal member to be resiliently deflected so that a cable can be passed through the slit into and out of the respective through-hole. Each insert slit is preferably closed or substantially closed when the seal member is in its relaxed configuration (i.e. not being resiliently deformed to open the slit).

In an embodiment, the first and second cable slits are aligned at opposing angles relative to a transverse plane through the first and second seal members. The through-holes may be cylindrical and the transverse plane may be aligned on a diameter of the respective first and second through-holes. The first and second cable slits may be inclined at an angle in the region of 20 to 40 degrees, more preferably in the region of 30 degrees, to the transverse plane. In an embodiment, the first cable insertion slit may be inclined upwardly and the second cable insertion slit inclined downwardly when the transverse plane is aligned horizontally. The longitudinal axes of the first and second cable insertion slits may pass through a longitudinal axis of their respective through-holes.

In an embodiment, the first and second seal members define a plurality of cable passageways, each comprising a first through-hole in the first seal member and a corresponding second through-hole in the second seal member. In this embodiment, each of the first through-holes is provided with a first cable insertion slit and each of the second through-holes is provided with a second cable insertion slit, the respective first and second cable insertion slits of each cable passageway being offset from one another.

In an embodiment where the first seal member has a plurality of first through-holes and first cable insertion slits, at least some of the first cable insertion slits may initially be closed at or proximal their ends proximal to their respective first through-hole by a breakaway portion, the arrangement configured such that the breakaway portion can be removed or broken so as to extend the cable insertion slit into its respective first through-hole.

In an embodiment where the second seal member has a plurality of second through-holes and second cable insertion slits, at least some of the second cable insertion slits may initially be closed at or proximal their ends proximal to their respective second through-hole by a breakaway portion, the arrangement configured such that the breakaway portion can be removed or broken so as to extend the cable insertion slit into its respective second through-hole.

In an embodiment where the first and second seal members define a plurality of cable passageways, at least some of the through-holes may initially be closed at or proximal one end by a breakaway portion configured such that the breakaway portion can be removed so as to open the through-hole. In an embodiment, breakaway portions may be provided at an outer end of the second through-holes which are distal from the first seal member in use.

In an embodiment, each of the seal members has an outer major face and an inner major face, the inner major faces being in abutment in use. The inner major faces may be planer. The outer major face of the first seal member may have a central region and a peripheral sealing region surrounding and recessed below the central region. The outer major face of the second seal member may have a central region and a peripheral sealing region surrounding and recessed below the central region. Where the outer major faces of both the first and second seal members each have a central region and a peripheral sealing region surrounding and recessed below the central region, the central region of the outer major face of the first seal member may be differently sized from central region of the outer major face of the second seal member. The one or more cable passageways may extend through the central regions.

The seal members may be made from rubber, which may be a nitrile rubber with a Shore A value in the region of 50 to 60.

The clamping member may comprise a frame engageable with the peripheral sealing region of the outer major face of the second seal member. The frame may comprise an end face having a central aperture within which the central region of the outer major face of the second seal member is received, with the outer peripheral seal region in abutment with an inner surface of the end face. The central region of the outer major face of the second seal member may be a close fit within the central aperture of the end face of the frame. The clamping member may have two or more attachment lugs, each lug having an aperture for a fastener. The frame may be constructed from one or more polymeric materials.

In accordance with a further aspect of the invention, there is provided a vehicle having at least one cable feedthrough assembly in accordance with the first aspect of the invention mounted to a body panel of the vehicle to guide at least one cable through an aperture in the body panel.

In an embodiment, the vehicle is a working vehicle such as a tractor or excavator.

In an embodiment where the outer major face of the first seal member has a central region and a peripheral sealing region surrounding and recessed below the central region, the central region may be received within the aperture in the body panel, with the outer peripheral sealing region abutting and sealing with the body panel about the aperture. The arrangement may be configured such that the central region of the outer major face of the first seal member is a close fit within the body panel aperture.

The frame may be secured to the body panel by two or more releasable fasteners.

The body panel may be provided between a driver compartment of the vehicle and an exterior region of the vehicle. The body panel may be a bulkhead.

In an embodiment, the cable feedthrough assembly may be used to guide at least one control cable for a hydraulic system of the vehicle.

In an embodiment where the seal members define a plurality of cable passageways and wherein only one or some of the cable passageways are used to guide respective cables, those passageways which are not used may be closed by a respective breakaway portion in at least one of the first and second through-holes which define each of said unused passageways.

### BRIEF DESCRIPTION OF THE DRAWINGS

The invention will now be described, by way of example only, with reference to the accompanying drawings in which:

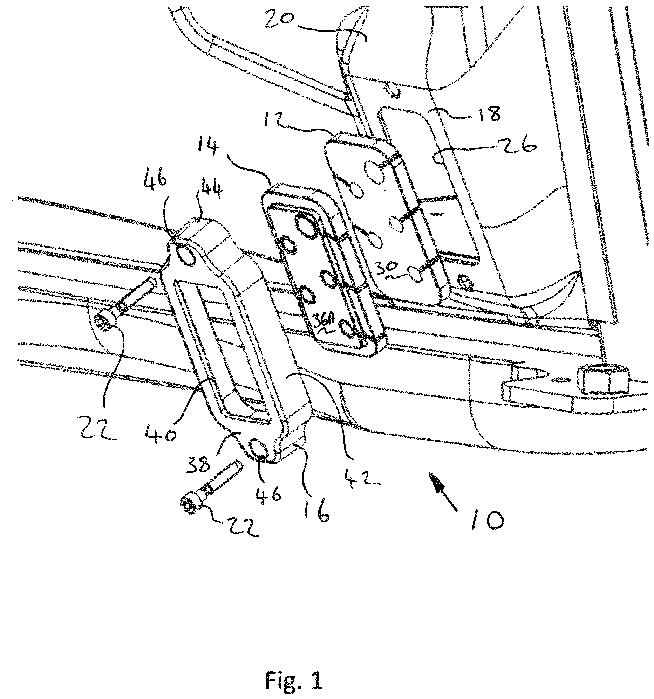

Figure 1 is an exploded perspective view of a cable feedthrough assembly in accordance with an aspect of the invention shown in position for mounting to a body panel of a vehicle, the assembly including first and second seal members and a clamp member for securing the seal members to the panel;

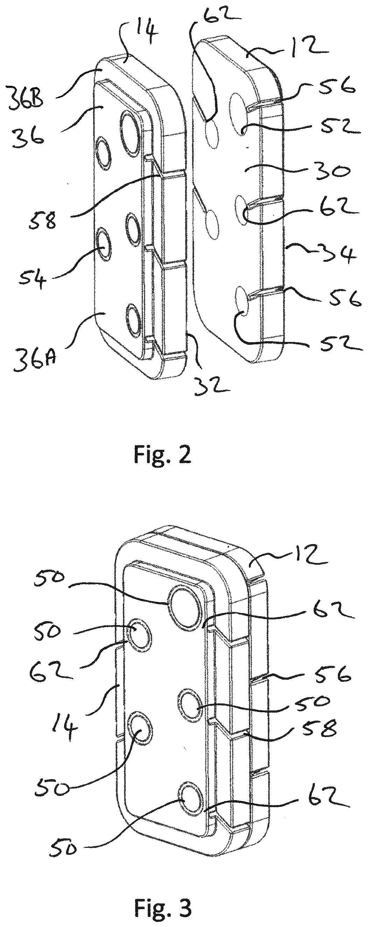

Figure 2 is an exploded perspective view of the first and second seal members which form part of the cable feedthrough assembly of Figure 1;
Figure 3 is a perspective view of the first and second seal members of Figure 2 showing the seal members in abutment with one another as they are in use;
Figure 4 is a plan view showing an outer major face of a first of the seal members of Figures 1 to 3;
Figure 5 is a cross-sectional view through the first seal member of taken on line A-A of Figure 4;
Figure 6 is a plan view showing an outer major face of a second of the seal members of Figures 1 to 3;
Figure 7 is a cross-sectional view through the second seal member of taken on line B-B of Figure 6;
Figures 8 to 10 are a series of perspective views illustrating a sequence for assembling the feedthrough assembly to a vehicle.

### DETAILED DESCRIPTION

An embodiment of a cable feedthrough assembly 10 in accordance with the invention will now be described with reference to the accompanying drawings.

The cable feedthrough assembly 10 comprises a first seal member 12, a second seal member 14, and a clamping member 16. In use, the first seal member 12 is located in abutment with an outer surface 18 of a body panel 20 of the vehicle, the second seal member 14 abuts the first seal member 12, and the clamping member 16 is secured to the body panel 20 by means of releasable fasteners 22 to clamp the second seal member 14 to the first seal member 12 and the first seal member 12 to the body panel 20.

The cable feedthrough assembly 10 is especially suitable for use in a working vehicle, such as a tractor or excavator or the like, in guiding one or more control cables 24 for a hydraulic system (not shown) of the vehicle through an aperture 26 in the body panel. Typically, such control cables 24 may be push-pull type cables and/or rotary control cables and are operatively connected at an inner end to user operable controls, such as a lever or rotary knob, within a driver compartment or cab of the vehicle. The cables pass through the aperture 26 in the body panel to an exterior region of the vehicle (which may be an engine compartment or at the rear of the vehicle) and are operatively connected at their other ends to a manually actuatable valve or other movable component of the hydraulic system.

It should be understood that references to "exterior" in relation to the vehicle and especial the vehicle body panel refer to any region outside of the driver compartment which might itself be enclosed by other body panels.

The first and second seal members 12, 14 are elastomeric members. In an embodiment, the first and second seal members are made from rubber, which may be a nitrile rubber and may have a Shore hardness A of 50 to 60. However, the first and second seal members can be made from any suitable, resiliently deformable material.

The first and second seal members 12, 14 are panel-like members, each having an inner major face 30, 32 and an oppositely directed outer major face 34, 36, which faces are generally rectangular in plan. The first and second seal members 12, 14 have the same peripheral shape and outer dimensions (i.e. width and length). The inner major faces 30, 32 are planar and abut one another in use. The outer major faces 34, 36 each have a central region 34A, 36A surrounded by a peripheral sealing region 34B, 36B which is recessed below the central region 34A, 36A.

The outer major face 34 of the first seal member is directed toward the exterior surface of the body panel 20 and the central region 34A is received in the aperture 26 of the body panel 20. The boss-like central region 34A is designed to be a close fit within the aperture 26 in the body panel and the peripheral sealing region 34B abuts the exterior surface 18 of the body panel about the aperture 26 to form a seal.

The outer major face 36 of the second seal member is directed toward an end face 38 of the clamping member, which has a camping member aperture 40 in which the boss-like central region 36A of the second seal member is received. The central region 36A is a close fit within the clamping member aperture 40 and the peripheral sealing region 36B is engaged by the inner surface of the end face 38 about the clamping member aperture to form a seal. The clamping member has a peripheral wall 42 which engages over the outer peripheries of the first and second seal members 12, 14. At either end of the seal members, the clamping member defines a mounting lug portion 44 with an aperture 46 through which a threaded shaft of a mounting bolt or screw 22 passes to secure the clamping member to the body panel. The mounting bolts or screws 22 engage with corresponding captive nuts (not shown) or other threaded attachment members on the body panel. The arrangement is configured such that the bolts or screws 22 are tightened to clamp the seal members 12, 14 together between the end face 38 of the clamping member and the body panel 20, with the frame-like clamping member encasing the majority of the seal members to form a protective housing. Other arrangements for releasably fastening the clamping member 16 to the body panel can be used.

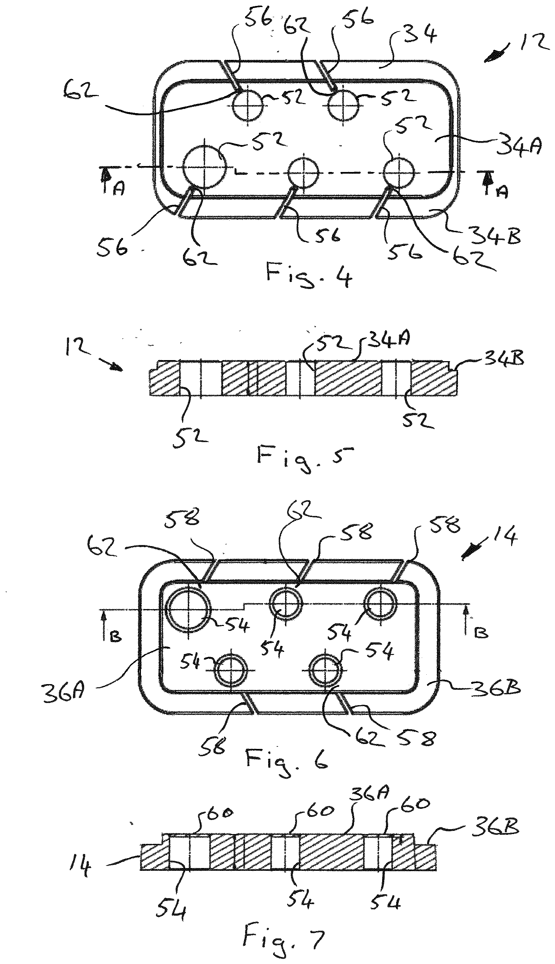

In an advantageous arrangement, the central regions 34A, 36A of the first and second seal members and the corresponding apertures 26, 40 in which they locate have different dimensions so that the seal members 12, 14 cannot be fitted the wrong way round. As illustrated in Figures 4 to 7, in this embodiment the central region 34A of the first seal member 12 is longer than the central region 36A of the second seal member. The aperture 26 in the body panel 20 is dimensioned to correspond with the central portion 34A of the first seal member 12 and the clamping member aperture 40 is dimensioned to correspond with the central portion 36A of the second seal member. In this arrangement, the central portion 34A of the first seal member cannot be inserted in the aperture 40 of the clamping member.

The first and second seal members 12, 14 define a number of cable passageways 50 through each of which a respective control cable 24 can be fed. In the present embodiment there are five cable passageways 50 but the number of cable passageways can be varied depending on the requirement of the vehicle and could be anywhere from one to ten or more cable passageways. Each cable passageway 50 comprises a first through-hole 52 extending through the first seal member 12 and a corresponding second through-hole 54 extending through the second seal member 14. Each of the first and second through-holes 52, 54 extend through their respective seal member 12, 14 between the inner and outer major faces 30, 32, 34, 36 and are arranged within the central region 34A, 36A. The first and second through-holes 52, 54 are generally cylindrical in shape and for any given cable passageway the corresponding first and second through-holes are the same size and axially aligned with one another. The through-holes are dimensioned to be a close fit about the respective cable. As illustrated, the cable feedthrough 10 may be configured to guide cables of differing diameter, with the through-holes being appropriately dimensioned so that some of the cable passageways have different diameters.

To enable a cable to be located in a respective through-hole 52, 54, each through hole is provided with a respective cable insert slit 56, 58 which extends from a peripheral edge of the seal member 12, 14 into the through-hole 52, 54. During fitting, the seal member can be deformed to open up the cable insertion slit 56, 58 to enable a cable to be inserted laterally through the slit and into the through-hole. Once the cable is located in the through-hole, the seal member can be repositioned so that the cable insertion slit 56, 58 returns substantially to its initial configuration in which it may be closed or substantially closed. For convenience, the first and second through-holes 52, 54 are arranged close to the outer periphery of the central regions of the seal members so that the length of the cable insertion slits 56, 58 is kept to a minimum.

In accordance with the invention, the cable insertion slits 56 in the first seal member 12 (the first cable insertion slits 56) are offset relative to the cable insertion slits 58 in the second seal member (the second cable insertion slits 58). This is advantageous as it means that the first and second cable insertions slits 56, 58 do not overlie one another. As a result, if any given cable insertion slit 56, 58 is opened, the flow path through to the interior of the driver compartment is closed by the other seal member to prevent the ingress of water and/or dirt into the driver compartment.

Conveniently, the cable insertion slits 56, 58 may be angled relative to a transverse plane taken through the central axis of their respective through-holes 52, 54 (or cable passageway), with the first cable insertion slits 56 being inclined in the opposite direction to the second cable slits 58. The first and second cable insertion slits 56, 58 may be inclined at an angle to the transverse plane in the region of 20 to 40 degrees, more preferably in the region of 30 degrees. In a particularly convenient arrangement, the first cable insertion slits 56 are inclined upwardly and the second cable insertion slits are inclined downwardly when the transvers plane is aligned horizontally and the first and second seal members are generally in an in-use orientation. As illustrated, the longitudinal axes of the first and second cable insertion slits 56, 58 may be aligned so as to pass through a longitudinal axis of their respective through-holes (cable passageway).

The cable feedthrough 10 is advantageously arranged so that only one or some of the cable passageways 50 defined in the first and seal members 12, 14 need be used whilst still effectively closing the aperture 26 in the body panel about the cables that are routed through the cable feedthrough 10. This is advantageous as it means that a common cable feedthrough can be used on a range of vehicles with different control cable arrangements. In one arrangement, the through-holes 52, 54 in at least one of the seal members 12, 14 are initially closed at one end by a breakaway portion 60. The breakaway portion 60 is removed to open up the through-hole and enable a particular cable passageway to be used. The breakaway portion 60 may be removed using a knife or punch or the arrangement may be configured such that the breakaway portion can be torn out. In the embodiment as shown, the second through-holes 54 in the second seal member 14 are closed at or proximal their outer ends at the outer major face 36 by a breakaway portion 60. In addition, the cable insertion slits 56, 58 may be initially formed so that they do not fully extend into their respective through-holes 52, 54 but stop just short so as to be closed by a breakaway portion 62. During fitting when a particular cable passage is to be used, the first and second cable slits 56, 58 for that passageway are extended into their respective through-holes 52, 54 by removing or breaking the breakaway portions 62. The breakaway portions 62 may be removed or broken by using a knife or other cutting implement to extend the slit into the through-hole or the seal members may be configured so that the slits can be extended into their through holes by tearing the breakaway portions 62. For any of the cable passageways that are not used, the breakaway portion 60 in the second through-hole and the breakaway portions 62 for the respective first and second cable insertion slits 56, 58 are left intact so that the seal members 12, 14 effectively close the aperture about those cables which are routed through the cable passageways in use.

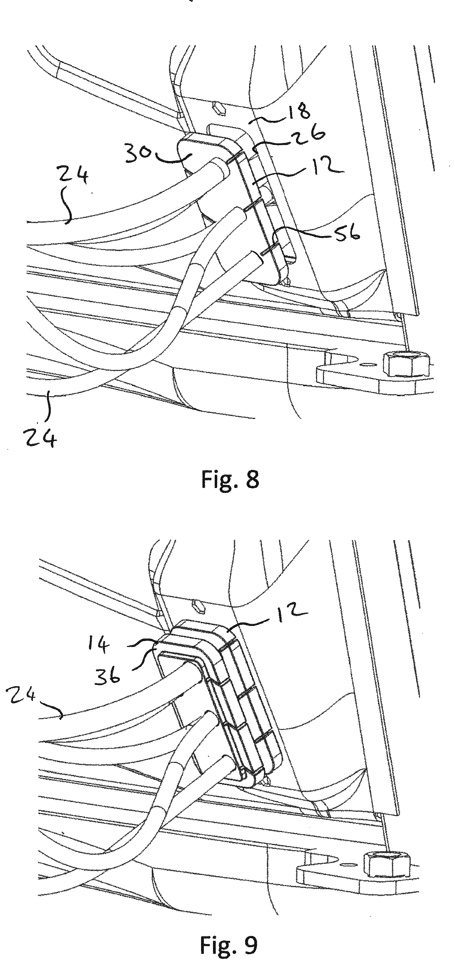

Figures 8 to 10 illustrate one method of fitting the cable feedthrough 10 to a vehicle. The control cables 24 are routed through the aperture 26 in body panel 20 and may be connected at one or both ends.

As illustrated in Figure 8, the first seal member 12 is assembled close to the body panel 20 with its outer major face 34A facing the body panel. The cable insertion slits 56 of each of the first through-holes in which a cable 24 is to be fitted (in this case all of them) are extended into their respective first through-holes. To fit each cable, the seal member 12 is bent to open up the respective cable insertion slit 56 and the cable passed laterally through the slit into the through-hole 52. Once the cable in place, the seal member is released and resiliently returns to its initial configuration in which that the seal member engages closely about the exterior of the cable and the slit is closed or at least substantially closed. The first seal member is pressed against the exterior surface of the body panel 20 with the central region 34A of the outer major face locating in the aperture 26 in the body panel.

To fit the second seal member 14, the breakaway portion 60 in each of the second through-holes 54 that are to be used (in this case all of them) is removed and the corresponding second cable insertion slits 58 are extended into the second through-holes. The second seal member is then assembled in a similar manner to the first seal member but oriented so that its inner major face 32 is directed toward the inner major face 30 of the first seal member 12 as shown in Figure 9. Once assembled, the second seal member 14 is slid along the cables 24 until its inner major face 32 is in abutment with the inner major face 30 of the first seal member.

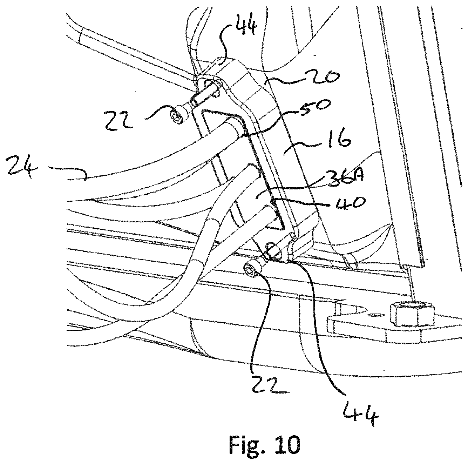

The clamping member 16 is then positioned over the first and second seal members 12, 14 with the central region 36A of the outer major face 36 of the second seal member 14 located in the clamping member aperture 40 as shown in Figure 10. The clamping member 16 is secured to the body panel 20 using the releasable fasteners 22 which are tightened so that the seal members 12, 14 are firmly clamped together between the clamping member 16 and the body panel 20. The cables are passed through the clamping member aperture 40 prior to being connected at both ends. This might be done prior to assembling the first and second seal members 12, 14 or afterwards, if the outer ends of the cables are not attached before the feedthrough is fitted.

The use of two separate seal members 12, 14 means that each seal member 12, 14 can be kept relatively thin and so is sufficiently flexible that it can adapt more easily to the shape of the cable than would be the case using a single seal member having a thickness equal to the combined thicknesses of the first and second seal members. In a non-limiting example, each of the first and second seal members 12, 14 may have a length in the region of 94 to 104 mm, a width in the region of 47 to 56 mm, and a thickness (measured between the inner and outer major surfaces) in the region of 10 to 12 mm. However, it will be appreciated that the dimensions of the first and second seal members can be varied as required to meet the requirements of any given application. Since both seal members 12, 14 can adapt to a cable substantially independently of one another, the chances of a fluid path opening up through both seal members 12, 14 is reduced. Should one seal member deform so that there is an opening about one of the cables, in most cases this would be closed by the other seal member. Furthermore, because the cable insertion slits 56, 58 in the first and second seal members are offset and do not overlap, even if one slit does not fully close or is deformed by the cable, a path through the slit into the driver compartment is closed by the other seal member to prevent ingress of water and/or dirt.

Whilst the invention has been described with reference to an embodiment for feeding through control cables of a hydraulic system on a vehicle, the principles of the cable feedthrough 10 disclosed herein can be adapted for use in guiding control cables for other systems on a vehicle or indeed for guiding electrical cables, a wiring harness, and/or other tubular members through an aperture in a vehicle body panel or indeed any wall-like member.

From reading the present disclosure, other modifications falling within the scope of the invention as defined in the appended claims will be apparent to persons skilled in the art. For example, the cable feedthrough 10 could be positioned on the interior side of the body panel.

## Claims

1. A cable feedthrough assembly (10) for guiding at least one cable (24) through an aperture (26) in a vehicle body panel (20), the assembly comprising a first resiliently deformable elastomeric seal member (12) and a second resiliently deformable elastomeric seal member (14) for abutment with the first seal member, wherein the seal members define at least one cable passageway (50) comprising a first through-hole (52) in the first seal member and a corresponding second through-hole (54) in the second seal member, **characterized in** the first seal member (12) is configured for abutment with a vehicle body panel (20), the cable feedthrough assembly including a clamping member (16) mountable to the vehicle body panel so as to clamp the second seal member (14) to the first seal member (12) and the first seal member (12) to the body panel (20), wherein the first seal member (12) has a first cable insertion slit (56) extending from a peripheral edge of the first seal member to the first through-hole (52) and the second seal member (14) has a second cable insertion slit (58) extending from a peripheral edge of the second seal member to the second through-hole (54), the first cable insertion slit (56) and the second cable insertion slit (58) being offset from one another, each of the first and second cable insertion slits (56, 58) being a narrow, cut-like, opening through the material of the seal member having a width smaller than the maximum diameter of its respective through-hole (52, 54).

2. A cable feedthrough assembly (10) as claimed in claim 1, wherein the first and second cable slits (56, 58) are aligned at opposing angles relative to a transverse plane through the first and second seal members (12, 14).

3. A cable feedthrough assembly (10) as claimed in claim 2, wherein the first cable insertion slit (56) is inclined upwardly and the second cable insertion slit (58) inclined downwardly when the transverse plane is aligned horizontally.

4. A cable feedthrough assembly (10) as claimed in any one of the preceding claims, wherein the first and second seal members (12, 14) define a plurality of cable passageways (50), each cable passageway comprising a first through-hole (52) in the first seal member (12) and a corresponding second through-hole (54) in the second seal member (14), each of the first through-holes (52) being provided with a first cable insertion slit (56) and each of the second through-holes (54) being provided with a second cable insertion slit (58), the respective first and second cable insertion slits (56, 58) of each cable passageway being offset from one another.

5. A cable feedthrough assembly (10) as claimed claim 4, wherein at least some of the first cable insertion slits (56) and/or at least some of the second insertion slits (58) are initially closed at or proximal their ends proximal to their respective through-hole by a breakaway portion (62), the arrangement configured such that the breakaway portion can be removed or broken so as to extend the cable insertion slit into its respective through-hole (52, 54).

6. A cable feedthrough assembly (10) as claimed in claim 4 or claim 5, wherein at least some of the first and/or second through-holes (52, 54) are initially closed at or proximal one end by a breakaway portion (60), the arrangement configured such that the breakaway portion can be removed so as to open the through-hole.

7. A cable feedthrough assembly (10) as claimed in claim 6, wherein at least some of the second through-holes (54) are closed by respective breakaway portions (60) at an outer end distal from the first seal member (12) in use.

8. A cable feedthrough assembly (10) as claimed in any one of the preceding claims, wherein each of the seal members (12, 14) has an outer major face (34, 36) and an inner major face (30, 32), the inner major faces being in abutment in use.

9. A cable feedthrough assembly (10) as claimed in claim 8, wherein the outer major face (34) of the first seal member has a central region (34A) and a peripheral sealing region (34B) surrounding and recessed below the central region.

10. A cable feedthrough assembly (10) as claimed in claim 8 or claim 9, wherein the outer major face (36) of the second seal member (14) has a central region (36A) and a peripheral sealing region (36B) surrounding and recessed below the central region.

11. A cable feedthrough assembly as claimed in claim 9 or claim 10, wherein the at least one cable passageway (50) extends through the central region or regions (34A, 36A).

12. A cable feedthrough assembly (10) as claimed in claim 10, or claim 11 when dependent on claim 10, wherein the clamping member (16) comprises a frame engageable with the peripheral sealing region (36B) of the outer major face of the second seal member (14), the frame having an end face (38) with a central aperture (40) within which the central region (36A) of the outer major face of the second seal member is received.

13. A vehicle comprising at least one cable feedthrough assembly (10) in accordance with any one of the preceding claims mounted to a body panel (20) of the vehicle to guide at least one cable (24) through an aperture (26) in the body panel.

14. A vehicle as claimed in claim 13, in which the cable feedthrough assembly (10) is a cable feedthrough assembly in accordance with claim 9, wherein the central region (34A) of the outer major face of the first seal member (12) is received within the aperture (26) in the body panel (20) with the outer peripheral sealing region (34B) abutting and sealing with the body panel about the aperture.

15. A vehicle as claimed in claim 13 or claim 14, in which the cable feedthrough assembly (10) is a cable feedthrough assembly in accordance with claim 6, wherein only one or some of the cable passageways (50) are used to guide respective cables (24), those passageways which are not used being closed by a respective breakaway portion (60) in at least one of the first and second through-holes (52, 54) which define each of said unused passageways.

## Patentansprüche

1. Kabeldurchführungsanordnung (10) zum Führen mindestens eines Kabels (24) durch eine Öffnung (26) in einem Karosseriepaneel (20), wobei die Anordnung ein erstes rückstellend verformbares Elastomer-Dichtelement (12) und ein zweites rückstellend verformbares Elastomer-Dichtelement (14) für ein Anliegen an dem ersten Dichtelement aufweist, wobei die Dichtelemente mindestens einen Kabeldurchlass (50) definieren, der ein erstes Durchgangsloch (52) in dem ersten Dichtelement und ein korrespondierendes zweites Durchgangsloch (54) in dem zweiten Dichtelement aufweist, **dadurch gekennzeichnet, dass** das erste Dichtelement (12) zum Anliegen an einem Karosseriepaneel (20) ausgebildet ist, wobei die Kabeldurchführungsanordnung ein Klemmelement (16) umfasst, das an dem Karosseriepaneel montierbar ist, um das zweite Dichtelement (14) an das erste Dichtelement (12) und das erste Dichtelement (12) an die Körperverkleidung (20) zu klemmen, wobei das erste Dichtelement (12) einen ersten Kabeleinführungsschlitz (56) aufweist, der sich von einer Randkante des ersten Dichtelements zu dem ersten Durchgangsloch (52) erstreckt und wobei das zweite Dichtelement (14) einen zweiten Kabeleinführungsschlitz (58) aufweist, der sich von einer Randkante des zweiten Dichtelements zu dem zweiten Durchgangsloch (54) erstreckt, wobei der erste Kabeleinführungsschlitz (56) und der zweite Kabeleinführungsschlitz (58) zueinander versetzt sind, wobei sowohl der erste, als auch der zweite Kabeleinführungsschlitz (56, 58) eine schmale, schnittartige Öffnung durch das Material des Dichtelements ist, die eine Breite aufweist, die kleiner ist als der maximale Durchmesser ihres jeweiligen Durchgangslochs (52, 54).

2. Kabeldurchführungsanordnung (10) nach Anspruch 1, wobei der erste und zweite Kabelschlitz (56, 58) unter entgegengesetzten Winkeln relativ zu einer durch das erste und zweite Dichtelement (12, 14) verlaufenden Querebene ausgerichtet sind.

3. Kabeldurchführungsanordnung (10) nach Anspruch 2, wobei der erste Kabeleinführungsschlitz (56) nach oben geneigt ist und der zweite Kabeleinführungsschlitz (58) nach unten geneigt ist, wenn die quer verlaufende Ebene horizontal ausgerichtet ist.

4. Kabeldurchführungsanordnung (10) nach einem der vorhergehenden Ansprüche, wobei das erste und zweite Dichtelement (12, 14) eine Mehrzahl von Kabeldurchlässen (50) definieren, wobei jeder Kabeldurchlass ein erstes Durchgangsloch (52) in dem ersten Dichtelement (12) und ein korrespondierendes zweites Durchgangsloch (54) in dem zweiten Dichtelement (14) aufweist, wobei das erste Durchgangsloch (52) mit einem ersten Kabeleinführungsschlitz (56) ausgestattet ist und jedes der zweiten Durchgangslöcher (54) mit einem zweiten Kabeleinführungsschlitz (58) ausgestattet ist, wobei die jeweiligen ersten und zweiten Kabeleinführungsschlitze (56, 58) jedes Kabeldurchgangs zueinander versetzt sind.

5. Kabeldurchführungsanordnung (10) nach Anspruch 4, wobei mindestens einige der ersten Kabeleinführungsschlitze (56) und/oder mindestens einige der zweiten Einführungsschlitze (58) anfänglich an oder nahe ihrer sich nahe ihrer jeweiligen Durchgangsbohrung befindenden Enden durch einen Losbrechanteil (62) geschlossen sind, wobei die Anordnung derart ausgebildet ist, dass der Losbrechanteil entfernt oder gebrochen werden kann, um den Kabeleinführungsschlitz in seine jeweilige Durchgangsbohrung (52, 54) auszudehnen.

6. Kabeldurchführungsanordnung (10) nach Anspruch 4 oder Anspruch 5, wobei mindestens einige der ersten und/oder zweiten Durchgangslöcher (52, 54) anfänglich an oder nahe einem Ende durch einen Losbrechanteil (60) geschlossen sind, wobei die Anordnung derart ausgebildet ist, dass der Losbrechanteil entfernt werden kann, um die Durchgangsbohrung zu öffnen.

7. Kabeldurchführungsanordnung (10) nach Anspruch 6, wobei mindestens einige der zweiten Durchgangsbohrungen (54) an einem äußeren Ende, das sich bei Verwendung fern von dem ersten Dichtelement (12) befindet, durch jeweilige Losbrechanteile (60) geschlossen sind.

8. Kabeldurchführungsanordnung (10) nach einem der vorhergehenden Ansprüche, wobei jedes Dichtelement (12, 14) eine äußere Hauptfläche (34, 36) und eine innere Hauptfläche (30, 32) aufweist, wobei die inneren Hauptflächen bei Verwendung aneinander anliegen.

9. Kabeldurchführungsanordnung (10) nach Anspruch 8, wobei die äußere Hauptfläche (34) des ersten Dichtelements eine zentrale Region (34A) und eine periphere Dichtregion (34B), die die zentrale Region umgibt und gegenüber dieser zurückspringt, aufweist.

10. Kabeldurchführungsanordnung (10) nach Anspruch 8 oder Anspruch 9, wobei die äußere Hauptfläche (36) des zweiten Dichtelements (14) eine zentrale Region (36A) und eine periphere Dichtregion (36B), die die zentrale Region umgibt und gegenüber dieser zurückspringt, aufweist.

11. Kabeldurchführungsanordnung nach Anspruch 9 oder Anspruch 10, wobei sich der mindestens eine Kabeldurchlass (50) durch die zentrale Region oder Regionen (34A, 36A) erstreckt.

12. Kabeldurchführungsanordnung (10) nach Anspruch 10 oder Anspruch 11, wenn abhängig von Anspruch 10, wobei das Klemmelement (16) einen Rahmen aufweist, der mit der peripheren Dichtregion (36B) der äußeren Hauptfläche des zweiten Dichtelements (14) in Eingriff bringbar ist, wobei der Rahmen eine Endfläche (38) mit einer zentralen Öffnung (40) aufweist, in welcher die zentrale Region der äußeren Hauptfläche des zweiten Dichtelements aufgenommen wird.

13. Fahrzeug mit mindestens einer Kabeldurchführungsanordnung (10) nach einem der vorhergehenden Ansprüche, die an einem Karosseriepaneel (20) des Fahrzeugs montiert ist, um mindestens ein Kabel (24) durch eine Öffnung (26) in dem Karosseriepaneel zu führen.

14. Fahrzeug nach Anspruch 13, wobei die Kabeldurchführungsanordnung (10) eine Kabeldurchführungsanordnung gemäß Anspruch 9 ist, wobei die zentrale Region (34A) der äußeren Hauptfläche des ersten Dichtelements (12) in der Öffnung (26) in dem Karosseriepaneel (20) aufgenommen ist, wobei die äußere periphere Dichtregion (34B) um die Öffnung herum an dem Karosseriepaneel anliegt und mit dem Karosseriepaneel abdichtet.

15. Fahrzeug nach Anspruch 13 oder Anspruch 14, wobei die Kabeldurchführungsanordnung (10) eine Kabeldurchführungsanordnung nach Anspruch 6 ist, wobei nur ein oder einige der Kabeldurchlässe (50) verwendet werden, um jeweilige Kabel (24) zu führen, wobei diejenigen Durchlässe, welche nicht genutzt werden, durch einen jeweiligen Losbrechanteil (60) in mindestens einem der ersten und/oder der zweiten Durchgangslöcher (52, 54), welche jeden der ungenützten Durchlässe definieren, geschlossen sind.

## Revendications

1. Ensemble de traversée de câble (10) destiné à guider au moins un câble (24) à travers une ouverture (26) sur un panneau de carrosserie de véhicule (20), l'ensemble comprenant un premier élément d'étanchéité en élastomère pouvant être déformé de manière élastique (12) et un second élément d'étanchéité en élastomère pouvant être déformé de manière élastique (14) destiné à venir en butée avec le premier élément d'étanchéité, dans lequel les éléments d'étanchéité définissent au moins un passage de câble (50) comprenant un premier orifice traversant (52) dans le premier élément d'étanchéité et un second orifice traversant (54) correspondant dans le second élément d'étanchéité, **caractérisé en ce que** le premier élément d'étanchéité (12) est configuré de manière à venir en butée avec un panneau de carrosserie de véhicule (20), l'ensemble de traversée de câble comportant un élément de retenue (16) pouvant être monté sur le panneau de carrosserie de véhicule de manière à maintenir le second élément d'étanchéité (14) sur le premier élément d'étanchéité (12) et le premier élément d'étanchéité (12) sur le panneau de carrosserie (20), dans lequel le premier élément d'étanchéité (12) comporte une première fente d'insertion de câble (56) s'étendant à partir d'un bord périphérique du premier élément d'étanchéité vers le premier orifice traversant (52) et le second élément d'étanchéité (14) comporte une seconde fente d'insertion de câble (58) s'étendant à partir d'un bord périphérique du second élément d'étanchéité vers le second orifice traversant (54), la première fente d'insertion de câble (56) et la seconde fente d'insertion de câble (58) étant décalées l'une par rapport à l'autre, chacune des première et seconde fentes d'insertion de câble (56, 58) étant une ouverture étroite, en forme de découpe, à travers le matériau de l'élément d'étanchéité présentant une largeur plus faible que le diamètre maximum de son orifice traversant (52, 54) respectif.

2. Ensemble de traversée de câble (10) selon la revendication 1, dans lequel les première et seconde fentes de câble (56, 58) sont alignées suivant des angles opposés par rapport à un plan transversal à travers les premier et second éléments d'étanchéité (12, 14).

3. Ensemble de traversée de câble (10) selon la revendication 2, dans lequel la première fente d'insertion de câble (56) est inclinée vers le haut et la seconde fente d'insertion de câble (58) est inclinée vers le bas lorsque le plan transversal est aligné horizontalement.

4. Ensemble de traversée de câble (10) selon l'une quelconque des revendications précédentes, dans lequel les premiers et seconds éléments d'étanchéité (12, 14) définissent une pluralité des passages de câble (50), chaque passage de câble comprenant un premier orifice traversant (52) sur le premier élément d'étanchéité (12) et un second orifice traversant (54) correspondant sur le second élément d'étanchéité (14), chacun des premiers orifices traversants (52) comportant une première fente d'insertion de câble (56) et chacun des seconds orifices traversants (54) comportant une seconde fente d'insertion de câble (58), les première et seconde fentes d'insertion de câble (56, 58) respectives de chaque passage de câble étant décalées l'une par rapport à l'autre.

5. Ensemble de traversée de câble (10) selon la revendication 4, dans lequel au moins certaines des premières fentes d'insertion de câble (56) et/ou au moins certaines des secondes fentes d'insertion (58) sont initialement obturées au niveau de leurs extrémités ou à proximité de celles-ci, à proximité de leur orifice traversant respectif par une partie séparée (62), l'agencement étant configuré de telle sorte que la partie séparée peut être retirée ou rompue de manière à étendre la fente d'insertion de câble dans son orifice traversant (52, 54) respectif.

6. Ensemble de traversée de câble (10) selon la revendication 4 ou 5, dans lequel au moins certains des premiers et/ou seconds orifices traversants (52, 54) sont initialement obturés au niveau d'une première extrémité ou à proximité de celle-ci par une partie séparée (60), l'agencement étant configuré de telle sorte que la partie séparée peut être retirée afin d'ouvrir l'orifice traversant.

7. Ensemble de traversée de câble (10) selon la revendication 6, dans lequel au moins certains des seconds orifices traversants (54) sont obturés par des parties séparées (60) respectives au niveau d'une extrémité externe distale par rapport au premier élément d'étanchéité (12) au cours de l'utilisation.

8. Ensemble de traversée de câble (10) selon l'une quelconque des revendications précédentes, dans lequel chacun des éléments d'étanchéité (12, 14) comporte une face principale externe (34, 36) et une face principale interne (30, 32), les faces principales internes étant en butée au cours de l'utilisation.

9. Ensemble de traversée de câble (10) selon la revendication 8, dans lequel la face principale externe (34) du premier élément d'étanchéité comporte une zone centrale (34A) et une zone d'étanchéité périphérique (34B) entourant la zone centrale et en retrait au-dessous de celle-ci.

10. Ensemble de traversée de câble (10) selon la revendication 8 ou 9, dans lequel la face principale externe (36) du second élément d'étanchéité (14) comporte une zone centrale (36A) et une zone d'étanchéité périphérique (36B) entourant la zone centrale et en retrait au-dessous de celle-ci.

11. Ensemble de traversée de câble selon la revendication 9 ou 10, dans lequel le au moins un passage de câble (50) s'étend à travers la ou les zones centrales (34A, 36A).

12. Ensemble de traversée de câble (10) selon la revendication 10 ou 11, lorsqu'elle dépend de la revendication 10, dans lequel l'élément de retenue (16) comprend une structure pouvant être couplée avec la zone d'étanchéité périphérique (36B) de la face principale externe du second élément d'étanchéité (14), la structure comportant une face d'extrémité (38) avec une ouverture centrale (40) dans laquelle est reçue la zone centrale (36A) de la face principale externe du second élément d'étanchéité.

13. Véhicule comprenant au moins un ensemble de traversée de câble (10) selon l'une quelconque des revendications précédentes monté sur un panneau de carrosserie (20) du véhicule afin de guider au moins un câble (24) à travers une ouverture (26) sur le panneau de carrosserie.

14. Véhicule selon la revendication 13, dans lequel l'ensemble de traversée de câble (10) est un ensemble de traversée de câble selon la revendication 9, dans lequel la zone centrale (34A) de la face principale externe du premier élément d'étanchéité (12) est reçue à l'intérieur de l'ouverture (26) dans le panneau de carrosserie (20), la zone périphérique d'étanchéité externe (34B) venant en butée avec le panneau de carrosserie et assurant l'étanchéité autour de l'ouverture.

15. Véhicule selon la revendication 13 ou 14, dans lequel l'ensemble de traversée de câble (10) est un ensemble de traversée de câble selon la revendication 6, dans lequel un seul ou plusieurs des passages de câble (50) sont utilisés afin de guider les câbles (24) respectifs, ces passages qui ne sont pas utilisés étant fermés par une partie séparée (60) respective sur au moins un des premier et second orifices traversants (52, 54) qui définissent chacun desdits passages inutilisés.
